# EUROPÄISCHE PATENTSCHRIFT

(11) **EP 2 106 511 B1**
(45) Veröffentlichungstag und Bekanntmachung des Hinweises auf die Patenterteilung: **12.01.2011**
(21) Anmeldenummer: 07821359.2
(22) Anmeldetag: 16.10.2007
(51) Int. Cl.: F16G 1/28, F16G 1/08, F16G 5/20, F16G 5/06

(54) **Gummizahnriemen**
Toothed belt made of rubber
Courroie dentée en caoutchouc

(30) Priorität: 01.12.2006 DE 102006056716
(43) Veröffentlichungstag der Anmeldung: 07.10.2009
(73) Patentinhaber: ContiTech Antriebssysteme GmbH, 30165 Hannover (DE)
(72) Erfinder: WELL, Michael, 38159 Vechelde (DE); KANZOW, Henning, 30519 Hannover (DE); TEVES, Reinhard, 30926 Seelze (DE)
(74) Vertreter: Finger, Karsten
(86) Internationale Anmeldenummer: PCT/EP2007/060992
(87) Internationale Veröffentlichungsnummer: WO 2008/064949

(56) Entgegenhaltungen:
- EP-A- 0 109 990
- EP-A- 1 108 750
- DE-A1- 4 113 360
- DE-A1- 10 314 493

## Beschreibung

Die Erfindung betrifft einen Gummizahnriemen, enthaltend zumindest eine Kurzfasern aufweisende, vulkanisierte Kautschukmischung, eine Festigkeitsträgerlage und gegebenenfalls. eine Oberflächenarmierung.

Antriebsriemen sind beispielsweise in Form von Zahnriemen (EP 0 599 145 B1), Keilrippenriemen (WO 02/084146 A1, EP 1 108 750 A1) und Keilriemen (EP 0 109 990 A1) bekannt. Als Kurzfasern, die in der Kautschukmischung enthalten sind, werden in diesen Schriften beispielsweise Fasern aus Aramid, Polyester, Polyethylen, Glas, Nylon, Wolle oder Baumwolle genannt.

Die Festigkeitsträgerlage enthält üblicherweise in Riemenumfangsrichtung verlaufende textile Festigkeitsträger aus Polyamiden (aliphatisch oder aromatisch), Polyestern oder Glas. Bei der gegebenenfalls vorhandenen Oberflächenarmierung kann es sich beispielsweise um Nylongewebe, Polyestergewebe oder Mischgewebe aus beiden handeln.

Aus der Schrift EP 0 109 990 A1 ist ferner bekannt, bei einem Keilriemen zusätzlich eine Querarmierung einzusetzen, die beispielsweise aus Polyvinylalkohol (PVA) besteht.

Der Erfindung liegt die Aufgabe zugrunde, Gummizahnriemen bereitzustellen, die sich durch eine erhöhte Laufzeit und Lebensdauer auszeichnen und einen Riemeneinsatz bei erhöhten Temperaturen ermöglichen.

Gelöst wird diese Aufgabe erfindungsgemäß dadurch, dass
- es sich bei den Kurzfasern zumindest zum Teil um Kurzfasern aus Polyvinylalkohol (PVA) handelt;
- die Kurzfasern eine Länge von 3 bis 6 mm aufweisen sowie
- die Kautschukmischung 3 bis 30 phr der Kurzfasern aus Polyvinylalkohol enthält.

Diese Fasern bestehen aus linearen Makromolekülen aus Polyvinylalkohol, die wegen ihres variablen Acetalisierungsgrades auch Polyvinylacetal (PVAL) genannt werden.

Es hat sich überraschenderweise herausgestellt, dass durch die Zumischung von Kurzfasern aus Polyvinylalkohol zur Kautschukmischung des Gummizahnriemens Vulkanisate mit sehr hohen Spannungswerten bei niedrigen Dehnungen erhalten werden können. Ein solches Vulkanisatverhalten bewirkt bei Zahnriemen, dass die Zähne steifer sind und damit einen höheren Widerstand gegen Zahnabscherung aufweisen. Zahnriemen mit einer solchen Mischung als Zahnmischung zeichnen sich daher durch eine erhöhte Lebensdauer aus.

Ferner bewirkt der Einsatz von Kurzfasern aus Polyvinylalkohol in der Kautschukmischung des Riemens, dass der Weiterreißwiderstand bei 150°C im Vergleich zu Mischungen mit p-Aramidfasern deutlich erhöht wird. Dies führt ebenfalls zu einer Verbesserung der Laufzeit und eine erhöhte maximale Einsatztemperatur kann erreicht werden.

Im Vergleich zu anderen synthetischen Fasern zeichnen sich die Kurzfasern aus Polyvinylalkohol durch einen sehr geringen Beschaffungspreis aus. Sie lassen sich hervorragend in eine Kautschukmischung einmischen und darin homogen verteilen.

Fasern aus Polyvinylalkohol sind seit langem bekannt und werden als Fasern mit hoher Festigkeit und hohem Modul z. B. von der Firma Kuraray vertrieben. Fasern aus Polyvinylalkohol, deren Herstellung und Verwendung werden beispielsweise in der DE 696 09 770 T2 und der DE 689 17 190 T2 beschrieben.

Die Kautschukmischung des Gummizahnriemens kann als Kurzfasern allein solche aus Polyvinylalkohol enthalten. Es ist aber auch möglich, dass Kurzfasern unterschiedlichen Typs mit Kurzfasern aus Polyvinylalkohol im Verschnitt eingesetzt werden.

Die in der Mischung eingesetzten Kurzfasern, weisen eine Länge von 3 bis 6 mm auf. Fasern dieser Länge zeigen optimale Wirkung auf die gewünschten mechanischen Eigenschaften und lassen sich gut in die Mischung einarbeiten. Fasern mit einer Länge von mehr als 6 mm lassen sich schlecht in die Mischung einmischen.

Die Kantschukmischung enthält 3 bis 30 phr, besonders bevorzugt 5 bis 10 phr, der Kurzfasern aus Polyvinylalkohol. Mit diesem Anteil an Kurzfasern wurden besonders gute Ergebnisse hinsichtlich der Lebensdauererhöhung der Riemen erzielt. Übersteigt der Anteil an Kurzfasern 30 phr, kann es zu einer zu starken Versteifung der Mischung führen, die kaum noch Dehnungen möglich macht.

Um die Anbindung der Kurzfasern in der Kautschukmatrix zu verbessern, hat es sich als vorteilhaft erwiesen, wenn die Kurzfasern, insbesondere die Kurzfasern aus Polyvinylalkohol mit einer Haftimprägnierung zur Gummi-Festigkeitsträger-Haftung ausgerüstet sind. Dabei kann es sich beispielsweise um einen so genannten RFL-Dip (Resorcin-Formaldehyd-Latex-Dip) handeln, mit dem die Fasern vor der Einmischung in die Kautschukmischung versehen werden. Durch die Haftimprägnierung wird außerdem die Einmischbarkeit der Fasern verbessert.

Die Kurzfasern enthaltende Kautschukmischung kann unterschiedliche Kautschuktypen enthalten. So kann der die Riemenkautschukmischung beispielsweise hydrierten Acrylnitril-Butadien-Kautschuk, Chloroprenkautschuk, Ethylen-Propylen-Dien-Copolymer, Ethylen-Propylen-Copolymer, Acrylatkautschuk, Styrol-Butadien-Copolymer und Polybutadien enthalten. Die Kautschuktypen können auch im Verschnitt eingesetzt werden. Um die Lebensdauer und Laufzeit der Riemen weiter zu erhöhen, enthält die Kautschukmischung des Riemens vorzugsweise hydrierten Acrylnitril-Butadien-Kautschuk (HNBR).

Bei dem erfindungsgemäßen Ziemen handelt es sich um einen Zahnriemen, dessen Zahngummi von der die Kurzfasern aus Polyvinylalkohol enthaltenden Mischung gebildet wird. Die Zähne werden dadurch steifer und es wird ein höherer Widerstand gegen Zahnabscherung erzeugt. Zahnriemen mit einer solchen Mischung als Zahnmischung zeichnen sich daher durch eine erhöhte Lebensdauer aus.

Die erfindungsgemäßen Gummizahnriemen können nach dem Fachmann bekannten Verfahren hergestellt werden.

Im Folgenden wird die Erfindung anhand von Ausführungsbeispielen näher erläutert, ohne jedoch auf diese Beispiele beschränkt zu sein.

In der folgenden Tabelle 1 sind Vergleichs- und erfindungsgemäße Kautschukmischungen für die Gummizahnriemen dargestellt. Die Tabelle 1 zeigt Kautschukmischungen auf der Basis von HNBR. Bei sämtlichen in den Tabellen enthaltenen Mischungsbeispielen sind die angegebenen Mengenangaben Gewichtsteile, die auf 100 Gewichtsteile Gesamtkautschuk bezogen sind (phr). Die Vergleichsmischung ist mit V gekennzeichnet, die erfindungsgemäßen Mischungen sind mit E gekennzeichnet. Die Mischungen der Tabelle wurden hinsichtlich der eingesetzten Kurzfasern variiert.

Die Mischungsherstellung erfolgte unter üblichen Bedingungen. Aus sämtlichen Mischungen wurden Prüfkörper durch Vulkanisation unter Druck bei 180 °C und einer Heizzeit von 20 min hergestellt und mit diesen Prüfkörpern für die Kautschukindustrie typische Materialeigenschaften bestimmt, die in der Tabelle aufgelistet sind. Für die Tests an Prüfkörpern wurden folgende Testverfahren angewandt:
- Shore-A-Härte bei Raumtemperatur gemäß DIN 53 505
- Zugfestigkeit bei Raumtemperatur und 150 °C gemäß DIN 53 504
- Reißdehnung bei Raumtemperatur gemäß DIN 53 504
- Spannungswert bei Raumtemperatur und 150 °C und 10 % Dehnung gemäß DIN 53 504
- Weiterreißwiderstand bei Raumtemperatur und 150 °C gemäß DIN 53 507 WRY an 2 mm dicken Probekörpern

Zugfestigkeit, Reißdehnung und Spannungswerte wurden bei den kalandrierten fasergefüllten Mischungen in Längsrichtung zu den durch die Kalandrierung ausgerichteten Fasern ermittelt, der Weiterreißwiderstand wurde zusätzlich zur Längsrichtung auch in Querrichtung gemessen.

**Tabelle 1**

| **Bestandteile** | **Einheit** | **1(V)** | **2(E)** | **3(E)** |
|---|---|---|---|---|
| HNBR | phr | 100 | 100 | 100 |
| p-Aramidfasern ^{a} | phr | 7 | - | - |
| Polyvinylalkoholfasern ^{b} | phr | - | 7 | - |
| Polyvinylalkoholfasernmit Dip ^{c} | phr | - | - | 7 |
| Ruß | phr | 15 | 15 | 15 |
| Kieselsäure | phr | 17 | 17 | 17 |
| Weichmacher | phr | 12,5 | 12,5 | 12,5 |
| Stearinsäure | phr | 1 | 1 | 1 |
| Alterungsschutzmittel | phr | 3 | 3 | 3 |
| Peroxid auf Träger ^{d} | phr | 6 | 6 | 6 |
| aktives Zinkoxid | phr | 5 | 5 | 5 |
| Magnesiumoxid | phr | 0,3 | 0,3 | 0,3 |
| Zinkdimethacrylat | phr | 20 | 20 | 20 |
| **Eigenschaften** | | | | |
| Härte | Shore A | 88 | 88 | 89 |
| Zugfestigkeit bei RT (längs) | MPa | 15,4 | 16,7 | 17,1 |
| Reißdehnung bei RT (längs) | % | 177 | 338 | 321 |
| Spannungswert 10 % bei RT (längs) | MPa | 8,1 | 13,3 | 15,8 |
| Weiterreißwiderstand bei RT (längs) | N/mm | 13,86 | 26,72 | 19,35 |
| Weiterreißwiderstand bei RT (quer) | N/mm | 14,37 | 27,44 | 27,38 |
| Zugfestigkeit bei 150 °C (längs) | MPa | 8,5 | 10,1 | 10,1 |
| Spannungswert 10 % bei 150 °C (längs) | MPa | 6,4 | 9,7 | 10,1 |
| Weiterreißwiderstand bei 150 °C (längs) | N/mm | 2,94 | 3,91 | 4,52 |
| Weiterreißwiderstand bei 150 °C (quer) | N/mm | 2,73 | 3,64 | 3,30 |

| | | | | |
|---|---|---|---|---|
| ^{a} p-Aramidfasern mit einer Länge von durchschnittlich 3 mm mit Haftdip, Twaron^{®}-Fasern, Teijin Twaron BV, Niederlande ^{b} Polyvinylalkoholfasern mit einer Länge von durchschnittlich 4 mm ohne Haftdip, Kuralon-Fasern, Kuraray, Japan ^{c} Polyvinylalkoholfasern mit einer Länge von durchschnittlich 4 mm mit Haftdip, Kuralon-Fasern, Kuraray, Japan ^{d} α,α'-Di-tert.-butyl-peroxi-di-isopropyl-benzol, 40 Gew.-% auf anorganischem Träger | | | | |

Aus der Tabelle wird ersichtlich, dass die erfindungsgemäßen Mischungen mit Kurzfasern aus Polyvinylalkohol im Vergleich zu den Mischungen mit p-Aramidfasern sehr hohe Spannungswerte bei niedrigen Dehnungen aufweisen. Dies führt bei Verwendung der Mischungen als Zahngummi in Zahnriemen zu einer Erhöhung des Widerstandes gegen Zahnabscherungen und damit letztendlich zu einer höheren Lebensdauer. Außerdem zeichnen sich die erfindungsgemäßen Mischungen durch höhere Festigkeiten, Spannungswerte und Weiterreißwiderstände bei Temperaturen von 150 °C aus. Diese spiegeln wider, dass bei Verwendung in Zahnriemen der Riemen einen höhere Lebensdauer, insbesondere bei Belastung mit hohen Temperaturen, aufweist. Man erhält mit den erfindungsgemäßen Mischungen Riemen mit einer erhöhten Laufleistung.

## Patentansprüche

1. Gummizahnriemen, enthaltend zumindest eine Kurzfasern aufweisende, vulkanisierte Kautschukmischung, eine Festigkeitsträgerlage und gegebenenfalls eine Oberflächenarmierung, **dadurch gekennzeichnet, dass**
- es sich bei den Kurzfasern zumindest zum Teil um Kurzfasern aus Polyvinylalkohol (PVA) handelt;
- die Kurzfasern eine Länge von 3 bis 6 mm aufweisen sowie
- die Kautschukmischung 3 bis 30 phr der Kurzfasern aus Polyvinylalkohol enthält.

2. Gummizahnriemen nach Anspruch 1, **dadurch gekennzeichnet, dass** die Kautschukmischung 5 bis 10 phr der Kurzfasern aus Polyvinylalkohol enthält

3. Gummizahnriemen nach zumindest einem der vorhergehenden Ansprüche, **dadurch gekennzeichnet, dass** die Kurzfasern mit einer Haftimprägnierung zur Gummi-Festigkeitsträger-Haftung ausgerüstet sind.

4. Gummizahnriemen nach zumindest einem der vorhergehenden Ansprüche, **dadurch gekennzeichnet, dass** die Kautschukmischung hydrierten Acrylnitril-Butadien-Kautschuk enthält.

## Claims

1. Toothed rubber belt containing at least one vulcanized rubber mixture including short fibres, a strength component ply and optionally a surficial reinforcement, **characterized in that**
- the short fibres are at least partly short fibres of polyvinyl alcohol (PVA) ;
- the short fibres are from 3 to 6 mm in length; and
- the rubber mixture contains 3 to 30 phr of the short fibres of polyvinyl alcohol.

2. Toothed rubber belt according to Claim 1, **characterized in that** the rubber mixture contains 5 to 10 phr of the short fibres of polyvinyl alcohol.

3. Toothed rubber belt according to at least one of the preceding claims, **characterized in that** the short fibres have an adhesive impregnation to ensure adherence of the strength component to the rubber.

4. Toothed rubber belt according to at least one of the preceding claims, **characterized in that** the rubber mixture contains hydrogenated acrylonitrile-butadiene rubber.

## Revendications

1. Courroie dentée en caoutchouc, contenant au moins un mélange de caoutchouc vulcanisé qui comporte des fibres courtes, une couche support de renforcement et éventuellement un renforcement de surface, **caractérisée en ce que**
- les fibres courtes sont au moins en partie des fibres courtes d'alcool polyvinylique (PVA) ;
- les fibres courtes présentent une longueur de 3 à 6 mm ; et
- le mélange de caoutchouc contient 3 à 30 phr des fibres courtes d'alcool polyvinylique.

2. Courroie dentée en caoutchouc selon la revendication 1, **caractérisée en ce que** le mélange de caoutchouc contient 5 à 10 phr des fibres courtes d'alcool polyvinylique.

3. Courroie dentée en caoutchouc selon au moins l'une quelconque des revendications précédentes, **caractérisée en ce que** les fibres courtes sont munies d'une imprégnation adhésive pour l'adhésion caoutchouc-support de renforcement.

4. Courroie dentée en caoutchouc selon au moins l'une quelconque des revendications précédentes, **caractérisée en ce que** le mélange de caoutchouc contient du caoutchouc acrylonitrile-butadiène hydrogéné.
